# EUROPEAN PATENT APPLICATION

(11) **EP 1 319 630 A1**
(43) Date of publication of application: **18.06.2003**
(21) Application number: 02258419.7
(22) Date of filing: 05.12.2002
(51) Int. Cl.: C02F 1/50

(54) **Anti-bacterial treatment**

(30) Priority: 16.12.2001 GB 0130072
(71) Applicant: Salamander (Engineering) Limited, Sutton Coldfield, West Midlands B75 7BY (GB)
(72) Inventor: Armfield, David William, Sutton Coldfield B75 6NP (GB)
(74) Representative: Fenwick, Elizabeth Anne

(57) **Abstract**

A method for treating liquids, particularly water, to render bacteria inactive, comprises a combination of silver-plated copper mesh with an activated fibrous carbon felt. The mesh and felt may be rolled together, compressed and then housed in a cartridge. Applications include commercial and domestic installations. Preferably the liquid flow rate through the combination is between 0.3 and 0.6 litres/minute/cm² of the cross-sectional area as well as between 40 and 80cm³/litre/minute media volume within the combination.

## Description

The invention relates to treatment of liquids, particularly in relation to large volumes of water held in storage or in a circulating system e.g. a hot water supply in domestic, commercial or large-scale installations such as hospitals or factories.

Unfortunately, pathogenic bacteria e.g. Pseudomonas, Legionella, E.Coli, Coliform, Salmonella, Staphylococcus, amongst many, can easily occur in water and can multiply in the conditions within the water supply. There have been many treatment media proposed to render the bacteria inactive but these have not been ideal because they tended to lose effectiveness very quickly and / or only rendered some of the bacteria harmless. Many combinations of materials have been proposed for water treatment e.g. silver & copper ionisation, chemical dosing, as well as using non-residual treatments using silver-coated mesh in combination with ceramic beads. This latter material, to be effective, is installed where water can be repeatedly circulated through it, thus maintaining a continuous management of the water. Whilst the mentioned combination does have some effectiveness, it has had poor site results and it is not clear that operating parameters have been adequately defined, consequently leading to its use in only limited applications.

An object of this invention is to provide a liquid treatment system which is highly effective against bacteria, continues to be effective over long periods, has a wider range of applications and is essentially inexpensive and not difficult to produce.

According to one aspect of the present invention a method of treating a liquid so as to render bacteria inactive comprises passing the liquid through a silver-plated copper mesh which is in combination with an activated fibrous carbon felt.

According to another aspect of the present invention a liquid treatment system comprises a silver-plated copper mesh in combination with an activated fibrous carbon felt.

According to yet another aspect of the present invention there is provided the use of a silver-plated copper mesh in combination with an activated fibrous carbon felt to treat bacteria in liquid.

The invention is particularly applicable to water treatment but could also be used to treat other systems such as water / oil mixtures e.g. 'suds-oil' as used in manufacturing and machine-shop applications.
'Activated' has its usual meaning in the art, i.e. it has been pretreated to increase its absorptive power. Activated fibrous carbon felt is available commercially.

For maximum efficiency of the treatment system, the correct 'contact time' is necessary to ensure good bacterial management. Consequently, the amount of media presented to the water flow, its construction, container size etc will influence flow parameters. In a particularly preferred embodiment the liquid flow through the mesh/felt combination will be maintained at between 0.3 and 0.6 litres/minute/cm² of cross-sectional area as well as between 40 and 80 cm³ / litre/minute media volume within the combination. In a preferred embodiment a container holding the media will be fitted with a 'flow restrictor' to help set the flow or with an automatic 'flow regulator'. This will ensure adequate 'contact time' to achieve the desired performance.

In this invention, the copper mesh contains voids and may be woven or non-woven in construction. Preferably the silver-plated copper mesh is layered with the activated fibrous carbon felt and they are then rolled up together into a cylindrical shape, pressed into a given shape within a former and then compressed to lock the material into the required shape for the envisaged product. This can then be encased in a plastic housing before installation as a 'cartridge' where required in the flow of liquid. Preferably both mesh and felt - the 'media'- are flexible to enable them to be formed in this way.

The system of the present invention can be made in various product formats which would range considerably to be suitable for installation in different applications. For cold water storage sanitation the treatment system would usually be coupled with a recirculating pump taking water from the outlet of a water storage tank, treating it and then returning it elsewhere. Other systems can be adapted for use with domestic shower-units and can even be fitted within the showerhead. Other systems can be installed in vending machines, or placed at the end of a 'dead-leg' pipe-run to ensure delivered water is uncontaminated.

It is believed that the present invention renders bacteria harmless by killing it. The debris would then pass into the water system. The 'dead' material is harmless, of such minute size (about one quarter of a millionth of a metre) 0.25µM (micron).

The silver medium influences the DNA of bacteria and inhibits it breeding; it ages and dies. The activated fibrous carbon medium is seen as a source of nutrient to the bacteria which attaches to the fibrous material, but then does NOT find any nutrient. The bacteria eventually dies through starvation. The bacteria tend to lodge in 'receptors' within the activated fibrous carbon but it is thought to be lost from this receptor after it dies, hence the apparent high performance of the carbon. When compared with granular activated carbon (a coal or wood derivative), this activated fibrous carbon felt can have 100 times the absorbency capabilities. Other minerals and contaminants will compromise the carbon with time, so it has a limited life estimated to be about 2 to 3 years in water of World Health Organisation standard (town water). Consequently, the recommended change interval for cartridges of 1 year is safe, economic and should ensure that these units never reach a stage of exhaustion. The safety margin and in public presentation terms, the opportunity to ensure good 'duty of care' to end-users is high.

## Claims

1. A method of treating a liquid so as to render bacteria inactive comprises passing the liquid through a silver-plated copper mesh which is in combination with an activated fibrous carbon felt.

2. A method of treating a liquid according to claim 1 in which the liquid passes through the mesh and felt combination at between 0.3 and 0.6 litres/minute/cm² of the cross-sectional area of the combination.

3. A method according to claim 1 or 2 which also includes a flow restrictor to control the contact time of the liquid with the mesh/felt combination.

4. A method according to claim 1,2 or 3 in which the liquid is water.

5. A method according to any preceding claim in which the mesh and felt are in layers.

6. A method according to any preceding claim in which the mesh and felt are rolled up together.

7. A method according to any preceding claim in which the mesh and felt are compressed.

8. A method according to any preceding claim in which there is between 40 and 80 cm³ / litre/minute media flow volume.

9. The use of a silver-plated copper mesh in combination with an activated fibrous carbon felt to treat bacteria in a liquid.

10. The use of a silver-plated copper mesh in combination with an activated fibrous carbon felt to treat bacteria in a liquid according to claim 9 and having the feature of any one of claims 1 to 8.
